# EUROPÄISCHE PATENTSCHRIFT

(11) **EP 3 738 825 B1**
(45) Veröffentlichungstag und Bekanntmachung des Hinweises auf die Patenterteilung: **10.05.2023**
(21) Anmeldenummer: 20168881.9
(22) Anmeldetag: 09.04.2020
(51) Int. Cl.: B60N 2/64, B60N 2/38

(54) **FAHRZEUGSITZ MIT VERLAGERBAREM RÜCKENLEHNENOBERTEIL**
VEHICLE SEAT WITH DISPLACEABLE BACKREST TOP PART
SIÈGE DE VÉHICULE POURVU DE PARTIE SUPÉRIEURE DE DOSSIER RÉGLABLE

(30) Priorität: 25.04.2019 DE 102019110765
(43) Veröffentlichungstag der Anmeldung: 18.11.2020
(73) Patentinhaber: GRAMMER AG, 92289 Ursensollen (DE)
(72) Erfinder: HALLER, Thomas, 92224 Amberg (DE)
(74) Vertreter: Hannke, Christian

(56) Entgegenhaltungen:
- EP-A1- 2 818 359
- FR-A1- 3 061 457

## Beschreibung

Die Erfindung betrifft einen Fahrzeugsitz mit einem Sitzteil und einem Rückenlehnenteil, welches ein Rückenlehnenunterteil und ein dazu in Höhenrichtung des Fahrzeugsitzes benachbart angeordnetes Rückenlehnenoberteil umfasst, wobei eine Verlagerungseinrichtung mit einem ersten Abschnitt, welcher fest mit dem Rückenlehnenunterteil verbunden ist, und mit einem zweiten Abschnitt, welcher fest mit dem Rückenlehnenoberteil verbunden ist, angeordnet ist, gemäß dem Oberbegriff des Anspruchs 1.

Gattungsgemäße Fahrzeugsitze, insbesondere für Nutzkraftfahrzeuge und speziell für landwirtschaftliche Nutzkraftfahrzeuge, sind aus dem Stand der Technik bereits bekannt. Das Dokument FR3061457A1 offenbart einen gattungsgemäßen Fahrzeugsitz.

Insbesondere Fahrzeugführer von landwirtschaftlichen Nutzkraftfahrzeugen nehmen bei ihrer Arbeit mit diesen landwirtschaftlichen Nutzkraftfahrzeugen und daran angehängten Arbeitsgeräten oftmals über einen längeren Zeitraum eine von der normalen nach vorne, also in Fahrrichtung, gerichteten Sitzhaltung eine seitlich oder rückwärts ausgerichtete weitere Sitzhaltung ein, um beispielsweise seitlich hinten in der Fahrzeugkabine angeordnete Bedienelemente besser erreichen und bedienen zu können oder um ein hinter dem landwirtschaftlichen Nutzkraftfahrzeug angehängtes Arbeitsgerät für einen längeren Zeitraum besser beobachten zu können.

Um dem Fahrzeugführer bei dieser seitlich oder rückwärts ausgerichteten Sitzhaltung den Zugang oder die Sicht nach hinten zu erleichtern, ist es aus dem Stand der Technik bekannt, ein oberes Rückenlehnenteil gegenüber einem unteren Rückenlehnenteil seitlich verlagern zu können. Allerdings sind Lösungen aus dem Stand der Technik bekannt, bei welchen stets ein Rest des oberen Rückenlehnenteils im Sichtbereich des Fahrzeugführers verbleibt. Dies wird als störend empfunden.

Es ist Aufgabe der vorliegenden Erfindung, ein Rückenlehnenteil zu entwickeln, welches ein Rückenlehnenoberteil aufweist, das sicher geführt vollständig aus dem Sichtbereich des Fahrzeugführers verlagerbar ist.

Die Aufgabe der Erfindung wird gelöst von einem Fahrzeugsitz mit den Merkmalen gemäß Anspruch 1.

Erfindungsgemäß weist der Fahrzeugsitz ein Sitzteil und ein Rückenlehnenteil auf, welches ein Rückenlehnenunterteil und ein dazu in Höhenrichtung des Fahrzeugsitzes benachbart angeordnetes Rückenlehnenoberteil umfasst, wobei eine Verlagerungseinrichtung mit einem ersten Abschnitt, welcher fest mit dem Rückenlehnenunterteil verbunden ist, und mit einem zweiten Abschnitt, welcher fest mit dem Rückenlehnenoberteil verbunden ist, angeordnet ist, wobei der zweite Abschnitt mittels einer zumindest teilweise in Breitenrichtung des Fahrzeugsitzes gerichteten Verlagerungsbewegung gemeinsam mit dem Rückenlehnenoberteil vollständig gegenüber dem Rückenlehnenunterteil verlagerbar ist, wobei der erste Abschnitt in Höhenrichtung vollständig unterhalb des Rückenlehnenoberteils angeordnet ist und eine Führungsbahn für die Verlagerungsbewegung des zweiten Abschnitts ausbildet.

Beispielsweise ist das Rückenlehnenunterteil gemeinsam mit dem Rückenlehnenoberteil in Breitenrichtung des Fahrzeugsitzes mittig angeordnet, wenn sich das Rückenlehnenoberteil in einer nicht-verlagerten Grundposition befindet. Ferner ist beispielsweise das Rückenlehnenunterteil in Breitenrichtung des Fahrzeugsitzes immer noch mittig angeordnet, auch wenn sich das Rückenlehnenoberteil in einer verlagerten Position befindet.

Beispielsweise sind die Grundposition und die verlagerte Position die einzigen beiden Positionen, welche das Rückenlehnenoberteil mechanisch gesichert, also beispielsweise durch Reibschluss mechanisch gesichert, einnehmen kann. Alternativ kann es vorgesehen sein, dass das Rückenlehnenoberteil zwischen der Grundposition und der verlagerten Position mehrere mechanisch gesicherte verlagerte Positionen einnehmen kann.

Bevorzugt kann die Verlagerungsbewegung initiiert werden, indem ein Reibschluss zwischen dem ersten und dem zweiten Abschnitt, welcher die mechanische Sicherung der jeweiligen Position ausbildet, überwunden wird. Bevorzugt gilt dies für eine Verlagerungsbewegung ausgehend von der Grundposition und auch für eine Verlagerungsbewegung zurück zur Grundposition.

Dies kann beispielsweise durch Ausüben einer Kraft auf das Rückenlehnenoberteil erfolgen, welche beispielsweise durch einen Sitzinsassen appliziert wird und groß genug ist, den Reibschluss zu überwinden.

Alternativ ist es möglich, dass der Fahrzeugsitz eine Einrichtung aufweist, welche dazu geeignet ist, einen Druck zu messen und/oder zu erfassen; beispielsweise ist diese Einrichtung ein Drucksensor, welcher in der Rückenlehne angeordnet ist, und bei Messung eines vom Sitzinsassen ausgeübten Drucks, welcher einen bestimmten Grenzwert überschreitet, ein entsprechendes Signal an eine Steuerungseinrichtung weitergibt. Weist der Fahrzeugsitz Aktoren beispielsweise in Form eines Motors oder Elektromagneten auf, so sind diese bevorzugt über die Steuerungseinrichtung ansteuerbar und beispielsweise in der Lage, das Rückenlehnenoberteil in Richtung der Verlagerungsbewegung zu bewegen.

Beispielsweise umfasst das Rückenlehnenoberteil und/oder das Rückenlehnenunterteil nur einen Gestellanteil oder nur einen Polsteranteil oder einen Gestellanteil zusammen mit einem Polsteranteil.

Bevorzugt ist das Rückenlehnenoberteil einteilig ausgestaltet, wenn es nur den Gestellanteil oder nur den Polsteranteil umfasst. Wenn das Rückenlehnenoberteil den Gestellanteil zusammen mit dem Polsteranteil umfasst, sind bevorzugt der Gestellanteil einteilig und der Polsteranteil einteilig ausgestaltet. Bevorzugt ist der Gestellanteil des Rückenlehnenoberteils aus einem tiefgezogenen Blechteil oder aus einem Kunststoff-Spritzgussteil gefertigt.

Ferner ist das Rückenlehnenoberteil bevorzugt das einzige Element (außer dem zweiten Anteil der genannten Verlagerungseinrichtung), welches mittels der genannten Verlagerungseinrichtung verlagerbar ist. Bevorzugt ist das Rückenlehnenoberteil ohne unmittelbare Verbindung zum Sitzteil ausgestaltet. Bevorzugt ist das Rückenlehnenoberteil nur mittels der genannten Verlagerungseinrichtung, also indirekt, mit dem Rückenlehnenunterteil verbunden. Das Rückenlehnenoberteil weist also bevorzugt keine unmittelbare Verbindung zum Rückenlehnenunterteil auf. Insbesondere ist der Gestellanteil des Rückenlehnenoberteils frei von einer direkten Verbindung zum Gestellanteil des Rückenlehnenunterteils. Es kann hingegen vorteilhaft sein, wenn der Polsteranteil des Rückenlehnenoberteils zumindest kontaktierend zum Polsteranteil des Rückenlehnenunterteils angeordnet ist.

Das Rückenlehnenunterteil ist also gegenüber dem Rest des Fahrzeugsitzes, insbesondere gegenüber dem Sitzteil, nicht mittels der genannten Verlagerungseinrichtung verlagerbar. Besonders bevorzugt gilt dies für den Gestellanteil und für den Polsteranteil des Rückenlehnenunterteils. Damit kann das Rückenlehnenunterteil stabil und gegebenenfalls auch komfortabler oder auch schwerer ausgestaltet sein, da seine Masse nicht bewegt werden muss. Gleichwohl kann das Rückenlehnenunterteil gegenüber dem Sitzteil mittels einer weiteren Verlagerungseinrichtung beispielsweise schwenkbar gelagert sein, um beispielsweise den Neigungsgrad des Rückenlehnenunterteils gegenüber dem Sitzteil verändern zu können.

Mittels der vorliegenden Erfindung ist also gewährleistet, dass nach einer erfolgten Verlagerungsbewegung des Rückenlehnenoberteils keine Elemente des Fahrzeugsitzes mehr im relevanten Sichtbereich stehen bleiben. Zumindest ein Teil des Bereichs, welcher im unverlagerten Zustand des Rückenlehnenoberteils vom Rückenlehnenoberteil eingenommen wird, ist im verlagerten Zustand des Rückenlehnenoberteils also frei vom Rückenlehnenoberteil und/oder auch frei von sonstigen Teilen des Fahrzeugsitzes.

Bevorzugt stellt die Verlagerungsbewegung eine rein translatorische Bewegung oder eine kombinierte Bewegung mit translatorischen und rotatorischen Anteilen dar. Bevorzugt ist die Verlagerungsbewegung nicht ausschließlich eine rotatorische Bewegung; zumindest nicht um eine körpernahe Achse, welche also durch den zweiten Anteil hindurchgehend verläuft. Hingegen ist eine rein rotatorische Verlagerungsbewegung um eine körperferne Achse, also um eine Achse, welche den zweiten Anteil nicht schneidet, möglich.

Bevorzugt weist das Rückenlehnenoberteil gegenüber dem Rückenlehnenunterteil nur den oder die Freiheitsgrade auf, welche sich auf eine Verlagerung mittels der genannten Verlagerungseinrichtung beziehen. Insbesondere ist es bevorzugt, dass das Rückenlehnenoberteil gegenüber dem Rückenlehnenunterteil nicht schwenkbar gelagert oder zumindest nicht um eine Achse schwenkbar gelagert ist, welche nicht parallel zur Höhenrichtung des Fahrzeugsitzes angeordnet ist. Diese baulichen Ausgestaltungen sorgen für eine vereinfachte Mechanik und halten somit die Kosten gering.

Erfindungsgemäß ist es vorgesehen, dass sich der erste Abschnitt der Verlagerungseinrichtung vollständig unterhalb des Rückenlehnenoberteils befindet. Er ist somit insbesondere nicht über eine in Höhenrichtung des Fahrzeugsitzes obere Grenze des Rückenlehnenunterteils nach oben hinausragend angeordnet. Besonders bevorzugt ist der erste Abschnitt vollständig unterhalb der oberen Grenze angeordnet. Damit kann der erste Abschnitt außerdem vorteilhaft im stabilen Rückenlehnenunterteil gelagert angeordnet sein. Insbesondere kann der erste Abschnitt selbst als Teil eines Gestellanteils des Rückenlehnenunterteils ausgestaltet sein; besonders bevorzugt ist dieser Teil in der Lage, die Stabilität des Gestellanteils des Rückenlehnenunterteils zu erhöhen, indem es beispielsweise als Verbindungselement zwischen anderen Teilen des Gestellanteils angeordnet ist.

Es ist bevorzugt, dass die Führungsbahn mittels mindestens eines sich in Breitenrichtung des Fahrzeugsitzes erstreckenden Führungselements ausgebildet ist. Beispielsweise ist dieses Führungselement rohrförmig, beispielsweise als Rohr, ausgestaltet. Das Führungselement gestaltet bevorzugt durch seine äußere Form (Außendurchmesser) und seinen Verlauf, vor allem in Verlagerungsrichtung, die Führungsbahn für den zweiten Abschnitt aus. Bevorzugt lässt sich die Form der Führungsbahn als identisch mit der Mittelachse des Führungselements beschreiben.

Während bei einigen Fahrzeugsitzen die Anordnung eines einzelnen Führungselements ausreichend erscheint, kann es vorteilhaft sein, die Freiheitsgrade der Verlagerungseinrichtung vollständig zu definieren, indem beispielsweise im Ruhezustand des Fahrzeugsitzes auch eine ungewollte Verkippung des zweiten Abschnitts um die Führungselemente ausgeschlossen wird. Erfindungsgemäß ist die Führungsbahn mittels zweier Führungselemente ausgebildet, welche in Höhenrichtung des Fahrzeugsitzes zueinander beabstandet angeordnet sind. So ist der zweite Abschnitt mit beiden Führungselementen verbunden angeordnet und mittels diesen geführt. In diesem Fall kann die Führungsbahn beispielsweise so definiert sein, dass sie einem Verlauf einer Linie folgt, welche mittig zwischen der Mittelachse des ersten Führungselements und der Mittelachse des zweiten Führungselements angeordnet ist.

Dabei kann die Führungsbahn entweder nur in Breitenrichtung verlaufend angeordnet sein. Es kann aber auch sein, dass beispielsweise die Führungselemente gebogen ausgestaltet sind, so dass die Führungsbahn beispielsweise in Breitenrichtung und in Höhenrichtung und/oder in Längsrichtung des Fahrzeugsitzes verlaufend angeordnet ist.

Die Führungsbahn bildet also bevorzugt eine Kurvenform aus, wobei die Kurvenform eindimensional, zweidimensional oder dreidimensional ausgestaltet sein kann. Es ist also mittels einer derartigen Variantenvielfalt der Führungsbahn gewährleistet, dass auch das Rückenlehnenoberteil auf vielfältige Weise verlagert werden kann. Beispielsweise kann mittels der Auswahl einer geeigneten Führungsbahn das Rückenlehnenoberteil in Sitzbreitenrichtung, also zur Seite hin, und gleichzeitig in Sitzhöhenrichtung, also beispielsweise nach unten, verlagert werden.

Es ist gemäß einer bevorzugten Ausführungsform vorteilhaft, wenn der zweite Abschnitt einen starr mit dem Rückenlehnenoberteil verbundenen Stützanteil aufweist, welcher mit einem Gleitanteil des zweiten Abschnitts verbunden ist, wobei der Gleitanteil mit dem ersten Abschnitt verbunden und diesem gegenüber beweglich gelagert ist.

Es ist außerdem vorteilhaft, wenn der Gleitanteil gegenüber dem mindestens einen Führungselement des ersten Abschnitts mittels Gleitführungselementen und/oder Rollenführungselementen gelagert ist. Beispielsweise kann der Gleitanteil Gleitlagerelemente als Gleitführungselemente umfassen, welche beispielsweise aus Polyoxymethylen (POM) gefertigt sind. Ferner ist möglich, dass der Gleitanteil Kugelgewindetriebe als Rollenführungselemente umfasst, die bevorzugt eine besonders reibungsärmere Verlagerung ermöglichen.

Ist nur ein Führungselement angeordnet, so ist es bevorzugt, dass der Gleitanteil gegenüber dem einen Führungselement mittels mindestens zwei Gleitführungselementen und/oder mittels mindestens zwei Rollenführungselementen gelagert ist.

Sind zwei Führungselemente oder mehr angeordnet, so ist es bevorzugt, dass der Gleitanteil gegenüber den zwei oder mehr Führungselementen insgesamt mittels mindestens zwei Gleitführungselementen und/oder mittels mindestens zwei Rollenführungselementen gelagert ist. Beispielsweise ist der Gleitanteil gegenüber einem ersten Führungselement mittels eines einzelnen Gleitführungselement oder mittels eines einzelnen Rollenführungselement gelagert. Beispielsweise ist der Gleitanteil gegenüber einem zweiten Führungselement mittels eines einzelnen Gleitführungselement oder mittels zwei Gleitführungselementen oder mittels eines einzelnen Rollenführungselement oder mittels zwei Rollenführungselementen gelagert.

Es ist bevorzugt, dass ein unterer Bereich des Stützanteils in Sitzlängsrichtung benachbart zum Gleitanteil angeordnet ist. Damit kann der Stützanteil beispielsweise starr mit dem Gleitanteil verbunden sein. Beispielsweise ist der Stützanteil mittels einer Schraubverbindung mit dem Gleitanteil verbunden.

Besonders bevorzugt ist der Stützanteil sich in Höhenrichtung des Fahrzeugsitzes erstreckend angeordnet. Außerdem erstreckt sich der Stützanteil in Höhenrichtung des Fahrzeugsitzes bevorzugt über die obere Grenze des Rückenlehnenunterteils nach oben weg und gleichzeitig über eine untere Grenze des Rückenlehnenoberteils nach unten weg. Der Stützanteil ist also in Längsrichtung des Fahrzeugsitzes zumindest abschnittsweise benachbart zum Rückenlehnenoberteil und zum Rückenlehnenunterteil angeordnet.

Besonders bevorzugt ist es, wenn der Stützanteil in einer an einem oberen Element eines Gestellanteils des Rückenlehnenunterteils angeordneten Aussparung während der Verlagerungsbewegung des Rückenlehnenoberteils führbar ist. Beispielsweise ist diese Aussparung parallel zum Verlauf der Führungsbahn ausgestaltet. Bei der Montage des Stützanteils kann dieser vorteilhaft zumindest mit seinem unteren Ende und/oder seinem unteren Bereich durch die Aussparung hindurchgeführt werden, wenn die Gesamtdicke des unteren Endes kleiner ist als die Breite der Aussparung.

Besonders bevorzugt ist der Stützanteil in Form eines Blechs ausgestaltet, welches eine oder mehrere Abkantungen aufweist. Ein Blech lässt sich mittels eines Lasers vorteilhaft so zuschneiden, dass überflüssige Anteile einfach weggelassen werden können, wodurch die Masse klein gehalten werden kann. Gleichzeitig bietet die planare Fläche nicht-abgekanteter Bereiche einen ideale Montageort für den Gleitanteil.

Bevorzugt weist der Gestellanteil des Rückenlehnenunterteils in Längsrichtung des Fahrzeugsitzes benachbart zur Position des Gleitanteils und/oder des Stützanteils eine Aussparung auf, so dass der Ort für die Montage der Baugruppe umfassend den Gleitanteil und den Stützanteil an den Führungselementen frei zugänglich ist.

Es ist ferner möglich, dass die Verlagerungsbewegung des Rückenlehnenoberteils ausgehend von einer nicht-verlagerten Grundposition des Rückenlehnenoberteils lediglich in eine einzelne Richtung, beispielsweise nur nach rechts, initiierbar ist. Alternativ ist die Verlagerungsbewegung des Rückenlehnenoberteils ausgehend von der nicht-verlagerten Grundposition des Rückenlehnenoberteils in zwei Richtungen, beispielsweise nach rechts und nach links, initiierbar.

Ferner ist es vorteilhaft, wenn ein Gestellanteil des Rückenlehnenunterteils mindestens ein Seitenteil aufweist, welches ein Stoppelement für die Verlagerungsbewegung des Rückenlehnenoberteils ausbildet. Somit kann die Verlagerungsbewegung innerhalb vordefinierbarer Grenzen ausgestaltet sein.

Es ist außerdem vorteilhaft, wenn der Gestellanteil des Rückenlehnenunterteils mindestens ein Seitenteil aufweist, mittels welchem das mindestens eine Führungselement gelagert ist. Bevorzugt ist das mindestens eine Führungselement mittels einer festen Einspannung mit dem mindestens einen Seitenteil verbunden.

Besonders bevorzugt weist der Gestellanteil des Rückenlehnenunterteils zwei Seitenteile auf, welche sich in Breitenrichtung des Fahrzeugsitzes gegenüberliegend angeordnet sind. Besonders bevorzugt ist das mindestens eine Führungselement jeweils mittels einer festen Einspannung mit den genannten zwei Seitenteilen verbunden.

Durch die vorliegende Erfindung kann das Rückenlehnenoberteil vorteilhaft relativ schmal ausgestaltet werden, da die sich bei der Verlagerung mit dem Rückenlehnenoberteil bewegenden und damit verbundenen Elemente insgesamt eine geringe Masse aufweisen und somit das Rückenlehnenoberteil nicht als stabile Basis für die Elemente fungieren muss. Außerdem weisen die sich bewegenden Elemente einen Schwerpunkt auf, der vorteilhaft in Höhenrichtung des Fahrzeugsitzes im Gegensatz zu einem herkömmlichen Fahrzeugsitz, bei dem der erste Anteil oberhalb des Rückenlehnenunterteils angeordnet ist, relativ weit unten liegt. Dies gestaltet den Sitz stabil.

Insgesamt ist es vorteilhaft, wenn ein Verhältnis zwischen einer Gesamtbreite des Rückenlehnenunterteils und einer Gesamtbreite des Rückenlehnenoberteils einen Wert aus einem Bereich von 1,2 bis 3, bevorzugt von 1,5 bis 2 aufweist. Das Rückenlehnenoberteil ist also bevorzugt schmal in Relation zum Rückenlehnenunterteil und kann daher schnell und mühelos verlagert werden.

Weitere Vorteile, Ziele und Eigenschaften vorliegender Erfindung werden anhand anliegender Zeichnung und nachfolgender Beschreibung erläutert, in welchen ein Fahrzeugsitz beispielhaft mit unterschiedlich ausgestalteten Führungseinrichtungen dargestellt und beschrieben ist.

In der Zeichnung zeigen:
- Figur 1a: schematisch eine erste perspektivische Ansicht eines Fahrzeugsitzes mit einem Rückenlehnenoberteil in einer Grundposition;
- Figur 1b: schematisch eine zweite perspektivische Ansicht des Fahrzeugsitzes gemäß Fig. 1a mit dem Rückenlehnenoberteil in einer verlagerten Position;
- Figur 2: eine dritte perspektivische Ansicht des Rückenlehnenteils;
- Figur 3a: eine vierte perspektivische Ansicht des Rückenlehnenteils;
- Figur 3b: ein Detail der Figur 3a;
- Figur 4: eine Explosionsdarstellung des Rückenlehnenteils.

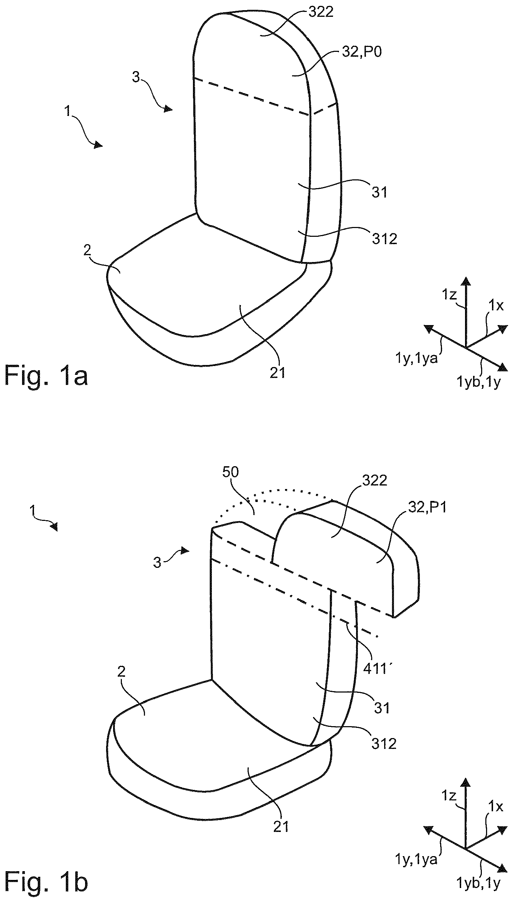

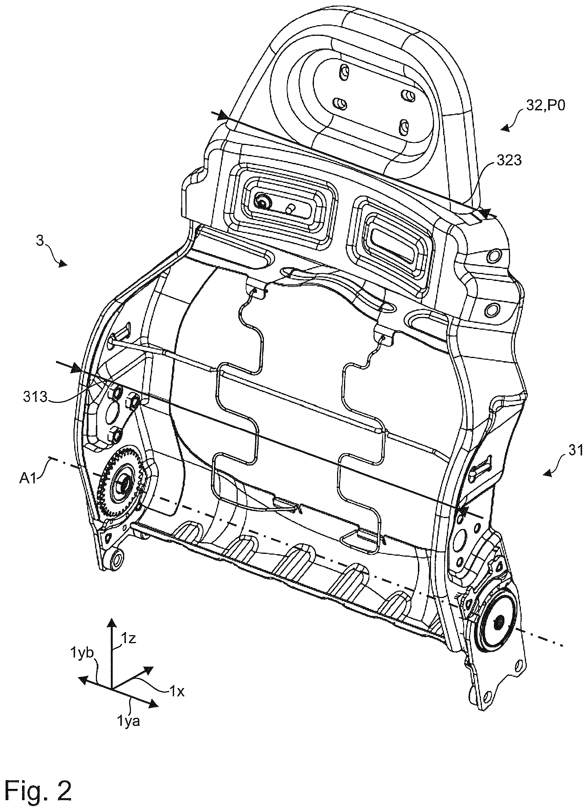

Es sei erwähnt, dass in den Figuren 2 bis 4 jeweils nur Gestellanteile 311, 321 des Rückenlehnenteils 3 zu sehen sind, während in den Figuren 1a und 1b nur Polsteranteile 312, 322 des Rückenlehnenteils 3 und ein Polsteranteil 21 des Sitzteils 2 zu sehen sind.

Gemäß den Figuren 1a und 1b ist ein Fahrzeugsitz (1) gezeigt mit einem Sitzteil (2) und mit einem Rückenlehnenteil (3), welches ein Rückenlehnenunterteil (31) und ein dazu in Höhenrichtung (1z) des Fahrzeugsitzes (1) benachbart angeordnetes Rückenlehnenoberteil (32) umfasst. Ebenfalls eingezeichnet sind die Längsrichtung 1x und die Breitenrichtung 1y des Fahrzeugsitzes 1, wobei bei letzterer zwischen einer Breitenrichtung nach rechts 1ya und einer Breitenrichtung nach links 1yb (jeweils aus Sicht eines Sitzinsassen) unterschieden wird.

Während sich gemäß der Fig. 1a das Rückenlehnenoberteil (32) in einer Grundposition P0, also einer nicht verlagerten Position befindet, ist gemäß Fig. 1b das Rückenlehnenoberteil (32) in einer verlagerten Position P1 zu sehen. Vorliegend kommt diese verlagerte Position P1 mittels einer reinen Translationsbewegung des Rückenlehnenoberteils (32) gegenüber dem Rückenlehnenunterteil (31) nach links 1yb entlang der Führungsbahn 411` zustande.

Zu sehen ist, dass gemäß Fig. 1a das Rückenlehnenunterteil 31 gemeinsam mit dem Rückenlehnenoberteil 32 in Breitenrichtung 1y, 1ya, 1yb des Fahrzeugsitzes 1 mittig angeordnet ist, wenn sich das Rückenlehnenoberteil 32 in der Grundposition P0 befindet. Außerdem ist gemäß Fig. 1b das Rückenlehnenunterteil 32 in Breitenrichtung 1y, 1ya, 1yb des Fahrzeugsitzes 1 immer noch mittig angeordnet, auch wenn sich das Rückenlehnenoberteil 32 in der verlagerten Position P1 befindet.

Gemäß den Figuren 2 bis 4 ist das Rückenlehnenteil (3), welches das Rückenlehnenunterteil (31) und das dazu in Höhenrichtung (1z) des Fahrzeugsitzes (1) benachbart angeordnetes Rückenlehnenoberteil (32) umfasst, nochmals in verschiedenen Ansichten abgebildet.

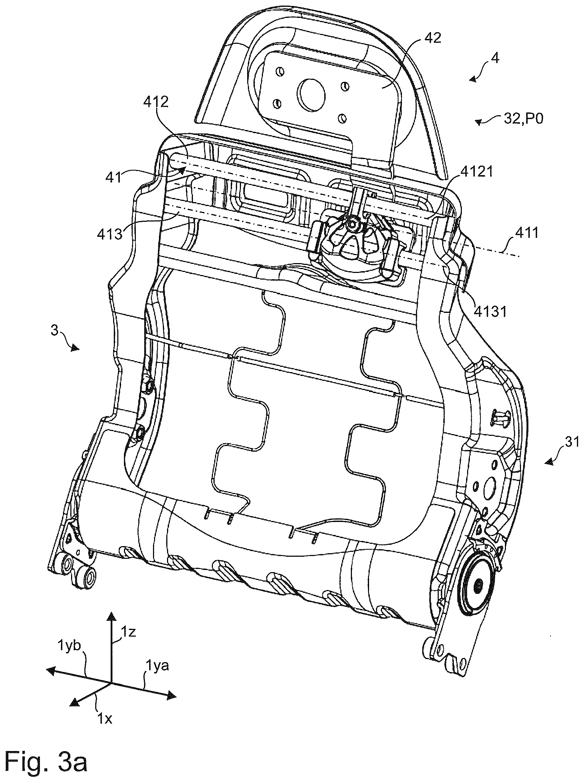

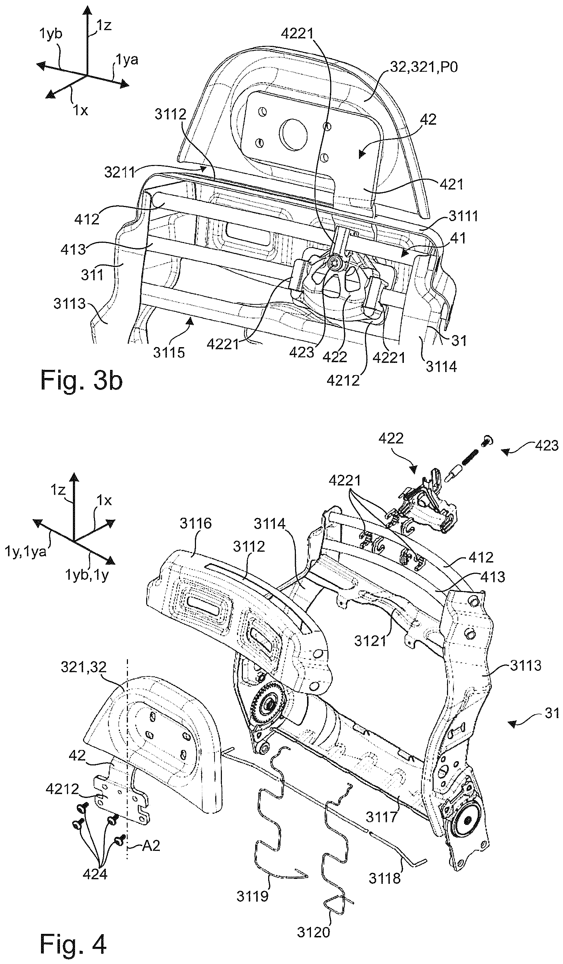

Insbesondere die Figuren 3a, 3b und 4 zeigen dabei eine Verlagerungseinrichtung (4) mit einem ersten Abschnitt (41), welcher fest mit dem Rückenlehnenunterteil (31) verbunden ist, und mit einem zweiten Abschnitt (42), welcher fest mit dem Rückenlehnenoberteil (32) verbunden ist, angeordnet ist. Dabei ist der zweite Abschnitt (42) mittels einer vorliegend ausschließlich in Breitenrichtung (1y) des Fahrzeugsitzes (1) gerichteten Verlagerungsbewegung gemeinsam mit dem Rückenlehnenoberteil (32) vollständig gegenüber dem Rückenlehnenunterteil (31) verlagerbar.

Deutlich zu sehen ist, dass der erste Abschnitt (41) in Höhenrichtung (1z) vollständig unterhalb des Rückenlehnenoberteils (32) angeordnet ist und eine Führungsbahn (411) für die Verlagerungsbewegung des zweiten Abschnitts (42) ausbildet.

Vorliegend ist ein Gestellanteil 321 des Rückenlehnenoberteils 31 einteilig ausgestaltet.

Ferner ist das Rückenlehnenoberteil 32 vorliegend das einzige Element außer dem zweiten Anteil 42, welches mittels der genannten Verlagerungseinrichtung 4 verlagerbar ist. Vorliegend ist das Rückenlehnenoberteil 32 ohne unmittelbare Verbindung zum Sitzteil 2 (siehe Fig. 1a und 1b) ausgestaltet. Vorliegend ist das Rückenlehnenoberteil 32 nur mittels der genannten Verlagerungseinrichtung 4, also indirekt, mit dem Rückenlehnenunterteil 31 verbunden.

Das Rückenlehnenoberteil 32 weist also vorliegend keine unmittelbare Verbindung zum Rückenlehnenunterteil 31 auf. Vorliegend ist der Gestellanteil 321 des Rückenlehnenoberteils 32 frei von einer direkten Verbindung zum Gestellanteil 311 des Rückenlehnenunterteils 31.

Gemäß den Figuren 1a und 1b ist der Polsteranteil 322 des Rückenlehnenoberteils 32 kontaktierend zum Polsteranteil 312 des Rückenlehnenunterteils 31 angeordnet. Des Weiteren ist der Polsteranteil 312 des Rückenlehnenunterteils 31 kontaktierend zum Polsteranteil 21 des Sitzteils 2 angeordnet.

Das Rückenlehnenunterteil 31 ist gegenüber dem Rest des Fahrzeugsitzes 1, insbesondere gegenüber dem Sitzteil 2, nicht mittels der genannten Verlagerungseinrichtung 4 verlagerbar. Dies gilt für den Gestellanteil 311 und für den Polsteranteil 312 des Rückenlehnenunterteils 31. Damit kann das Rückenlehnenunterteil 31 stabil und gegebenenfalls auch komfortabler oder auch schwerer ausgestaltet sein, da seine Masse nicht bewegt werden muss. Gleichwohl ist das Rückenlehnenunterteil 31 gegenüber dem Sitzteil 2 mittels einer weiteren Verlagerungseinrichtung (hier nur schematisch anhand der Achse A1 gemäß Fig. 2 veranschaulicht) schwenkbar gelagert, um den Neigungsgrad des Rückenlehnenunterteils 31 gegenüber dem Sitzteil 2 verändern zu können.

Es ist also gewährleistet, dass nach einer erfolgten Verlagerungsbewegung des Rückenlehnenoberteils 32 keine Elemente des Fahrzeugsitzes 1 mehr im relevanten Sichtbereich stehen bleiben. Zumindest ein Teil des Bereichs 50 (siehe hier von gepunkteten Linien eingefasster Bereich 50 gemäß Fig. 1b), welcher im unverlagerten Zustand P0 des Rückenlehnenoberteils 32 vom Rückenlehnenoberteil 32 eingenommen wird, ist im verlagerten Zustand P1 des Rückenlehnenoberteils 32 also frei vom Rückenlehnenoberteil 32 und auch frei von sonstigen Teilen des Fahrzeugsitzes 1.

Während gemäß den Figuren 1a und 1b ein Fahrzeugsitz gezeigt ist, dessen Verlagerungsbewegung rein translatorisch ausgestaltet ist (siehe Führungsbahn 411`), zeigt insbesondere die Fig. 4, dass der erste Anteil 41 und insbesondere die Führungselemente 412, 413 in Sitzbreitenrichtung verlaufen und in Sitzlängsrichtung gesehen gebogen ausgestaltet sind. Damit erfährt der zweite Anteil 42 eine rein rotatorische Bewegung um eine körperferne Achse A2 (veranschaulicht gemäß Fig. 4), welche den zweiten Anteil 42 nicht schneidet.

Vorliegend weist das Rückenlehnenoberteil 32 gegenüber dem Rückenlehnenunterteil 31 nur den einen Freiheitsgrad auf, welcher sich auf eine Verlagerung mittels der genannten Verlagerungseinrichtung 4 bezieht. Vorliegend ist das Rückenlehnenoberteil 32 gegenüber dem Rückenlehnenunterteil 31 nicht schwenkbar gelagert.

Gut zu sehen ist, dass sich der erste Abschnitt 41 (siehe Führungselemente 412, 413) der Verlagerungseinrichtung 4 vollständig unterhalb des Rückenlehnenoberteils 31 befindet. Er ist somit nicht über eine in Höhenrichtung 1z des Fahrzeugsitzes 1 obere Grenze des Rückenlehnenunterteils 31, welche vorliegend durch das obere Element 3111 des Rückenlehnenunterteils 31 ausgestaltet ist, nach oben hinausragend angeordnet. Vorliegend ist der erste Abschnitt 41 vollständig unterhalb der oberen Grenze angeordnet. Der erste Abschnitt 41 ist außerdem im stabilen Rückenlehnenunterteil 31 gelagert und ist selbst als Teil des Gestellanteils 311 des Rückenlehnenunterteils 31 ausgestaltet. Vorliegend sind die beiden Führungselemente 412, 413 des ersten Abschnitts 41 nämlich als Verbindungselement zwischen zwei Seitenteilen 3113, 3114 des Gestellanteils 311 angeordnet.

Zu sehen ist ebenfalls, dass die Führungsbahn 411 (siehe Fig. 3a) mittels der zwei sich in Breitenrichtung 1y des Fahrzeugsitzes 1 erstreckenden Führungselemente 412, 413 ausgebildet ist. Diese Führungselemente 412, 413 sind jeweils als Rohr ausgestaltet und gestalten durch ihre äußere Form (also beispielsweise ihrem Außendurchmesser) und ihren Verlauf, vor allem in Verlagerungsrichtung, die Führungsbahn 411 für den zweiten Abschnitt 42 aus.

Die beiden Führungselemente 412, 413 sind in Höhenrichtung 1z des Fahrzeugsitzes 1 zueinander beabstandet angeordnet. So ist vorliegend auch der zweite Abschnitt 42 mit beiden Führungselementen 412, 413 verbunden angeordnet und mittels diesen geführt. In diesem Fall ist die Führungsbahn 411 so definiert, dass sie einem Verlauf einer Linie folgt, welche mittig zwischen der Mittelachse 4121 des ersten Führungselements 412 und der Mittelachse 4131 des zweiten Führungselements 413 angeordnet ist (siehe hier Darstellung gemäß der Fig. 3a).

Vorliegend ist die Führungsbahn 411 gemäß der Figur 3a in Breitenrichtung 1y und in Längsrichtung 1x des Fahrzeugsitzes 1 verlaufend angeordnet. Die Führungsbahn 411 bildet also eine Kurvenform aus, welche zweidimensional ausgestaltet ist. Dagegen ist die Führungsbahn 411' gemäß der Figur 1b nur in Breitenrichtung 1y des Fahrzeugsitzes 1 verlaufend angeordnet. Die Führungsbahn 411' bildet also eine Kurvenform aus, welche eindimensional ausgestaltet ist und damit einer Geraden entspricht.

Der zweite Abschnitt 42 weist vorliegend einen starr mit dem Rückenlehnenoberteil 32 verbundenen Stützanteil 421 auf, welcher mit einem Gleitanteil 422 des zweiten Abschnitts 42 verbunden ist, wobei der Gleitanteil 422 mit dem ersten Abschnitt 41 verbunden und diesem gegenüber beweglich gelagert ist.

Es ist außerdem gezeigt, dass der Gleitanteil 422 gegenüber den beiden Führungselementen 412, 413 des ersten Abschnitts 41 mittels Gleitführungselementen 4221 gelagert ist, die vorliegend durch Gleitlagerelemente aus Polyoxymethylen (POM) ausgestaltet sind.

Vorliegend ist der Gleitanteil 422 gegenüber dem ersten Führungselement 412 mittels eines einzelnen Gleitführungselement 4221 und gegenüber dem zweiten Führungselement 413 mittels zwei Gleitführungselementen 4221 gelagert.

Außerdem ist ein unterer Bereich 4212 des Stützanteils 421 in Sitzlängsrichtung 1x benachbart zum Gleitanteil 422 angeordnet. Der Stützanteil 421 ist vorliegend starr mit dem Gleitanteil 422 verbunden. Vorliegend ist der Stützanteil 421 mittels einer ersten 423 und mittels einer zweiten Schraubverbindung 424 mit dem Gleitanteil 422 verbunden.

Vorliegend ist der Stützanteil 421 sich in Höhenrichtung 1z des Fahrzeugsitzes 1 erstreckend angeordnet. Außerdem erstreckt sich der Stützanteil 421 in Höhenrichtung 1z des Fahrzeugsitzes 1 über die obere Grenze des Rückenlehnenunterteils 31 (siehe oberes Element 3111) nach oben weg und gleichzeitig über eine untere Grenze 3211 des Rückenlehnenoberteils 32 nach unten weg. Der Stützanteil 421 ist also in Längsrichtung 1x des Fahrzeugsitzes 1 abschnittsweise benachbart zum Rückenlehnenoberteil 32 und zum Rückenlehnenunterteil 32 angeordnet.

Vorliegend ist der Stützanteil 421 in Form eines Blechs ausgestaltet, welches mehrere Abkantungen aufweist. Damit bietet die planare Fläche des nicht-abgekanteten unteren Bereichs 4212 einen idealen Montageort für den Gleitanteil 422.

Außerdem ist gezeigt, dass der Stützanteil 421 in einer an einem oberen Element 3111 eines Gestellanteils 311 des Rückenlehnenunterteils 31 angeordneten Aussparung 3112 während der Verlagerungsbewegung des Rückenlehnenoberteils 32 führbar ist. Diese Aussparung 3112 ist vorliegend parallel zum Verlauf der Führungsbahn 411 ausgestaltet. Bei der Montage des Stützanteils 421 kann dieser zumindest mit seinem unteren Ende und/oder seinem unteren Bereich 4212 durch die Aussparung 3112 hindurchgeführt werden, da die Gesamtdicke des unteren Bereichs 4212 kleiner ist als die Aussparung 3112.

Ebenfalls zu sehen ist, dass der Gestellanteil 311 des Rückenlehnenunterteils 31 in Längsrichtung 1x des Fahrzeugsitzes 1 benachbart zur Position des Gleitanteils 422 und des unteren Bereichs 4212 des Stützanteils 421 eine Aussparung 3115 (siehe Bereich zwischen den beiden Seitenteilen 3113, 3114 in Breitenrichtung 1y) auf, so dass der Ort für die Montage der Baugruppe umfassend den Gleitanteil 422 und den Stützanteil 421 an den Führungselementen 412, 413 frei zugänglich ist.

Vorliegend ist die Verlagerungsbewegung des Rückenlehnenoberteils 32 ausgehend von der gemäß der Fig. 3a gezeigten nicht-verlagerten Grundposition P0 des Rückenlehnenoberteils 32 in zwei Richtungen 1ya, 1yb, nämlich nach rechts und nach links, initiierbar.

Außerdem bildet der Gestellanteil 311 des Rückenlehnenunterteils 31 mittels der beiden Seitenteile 3113, 3114 jeweils ein Stoppelement für die Verlagerungsbewegung des Rückenlehnenoberteils 32 in jeweils eine der beiden Richtungen 1ya, 1yb aus.

Außerdem sind beide Führungselemente 412, 413 mittels der beiden Seitenteile 3113, 3114 gelagert; vorliegend sind beide Führungselemente 412, 413 mittels einer festen Einspannung mit den beiden Seitenteilen 3113, 3114 verbunden. Die beiden Seitenteile 3113, 3114 sind sich in Breitenrichtung 1y des Fahrzeugsitzes 1 gegenüberliegend angeordnet.

Gemäß Fig. 4 weist der Gestellanteil 311 des Rückenlehnenunterteils 31 außerdem noch zwei Querstreben 3117, 3121 in Form tiefgezogener Blechteile oder Kunststoff-Spritzgussteile auf. Außerdem ist ein Abdeckteil 3116, beispielsweise in Form eines tiefgezogenen Blechs oder eines Kunststoff-Spritzgussteils, angeordnet, welches die Führungselemente 412, 413 sowie die Verstellmechanik der Verlagerungseinrichtung 4 nach vorne hin abdeckt und die Aussparung 3112 aufweist. Ferner sind Zugelemente 3118, 3119, 3120 in Form von Drahtzugelementen angeordnet, die von oben nach unten (siehe Zugelemente 3119, 3120) oder von links nach rechts (siehe Zugelement 3118) angeordnet sind und den Sitz insgesamt stabiler gestalten.

Vorliegend weist ein Verhältnis zwischen einer Gesamtbreite 313 des Rückenlehnenunterteils 31 und einer Gesamtbreite 323 des Rückenlehnenoberteils 32 (siehe Fig. 2) einen Wert von 1,5 auf.

Es versteht sich, dass es sich bei den vorstehend erläuterten Ausführungsbeispielen lediglich um eine erste Ausgestaltung des erfindungsgemäßen Fahrzeugsitzes handelt. Insofern beschränkt sich die Ausgestaltung der Erfindung nicht auf diese Ausführungsbeispiele.

### Bezugszeichenliste

- 1: Fahrzeugsitz
- 1x: Längsrichtung
- 1y: Breitenrichtung
- 1z: Höhenrichtung
- 2: Sitzteil
- 3: Rückenlehnenteil
- 4: Verlagerungseinrichtung
- 21, 312, 322: Polsteranteil
- 31: Rückenlehnenunterteil
- 32: Rückenlehnenoberteil
- 41: erster Abschnitt
- 42: zweiter Abschnitt
- 311, 321: Gestellanteil
- 313, 323: Gesamtbreite
- 411, 411': Führungsbahn
- 412,413: Führungselement
- 421: Stützanteil
- 422: Gleitanteil
- 423, 424: Schraubverbindung
- 3111: oberes Element
- 3112,3115: Aussparung
- 3113, 3114: Seitenteil
- 3116: Abdeckteil
- 3117,3121: Querstrebe
- 3118,3119,3120: Zugelement
- 3211: untere Grenze
- 4121,4131: Mittelachse
- 4212: unterer Bereich
- 4221: Gleitführungselemente
- A1, A2: Achse

## Patentansprüche

1. Fahrzeugsitz (1) mit einem Sitzteil (2) und einem Rückenlehnenteil (3), welches ein Rückenlehnenunterteil (31) und ein dazu in Höhenrichtung (1z) des Fahrzeugsitzes (1) benachbart angeordnetes Rückenlehnenoberteil (32) umfasst,
wobei eine Verlagerungseinrichtung (4) mit einem ersten Abschnitt (41), welcher fest mit dem Rückenlehnenunterteil (31) verbunden ist,
und mit einem zweiten Abschnitt (42), welcher fest mit dem Rückenlehnenoberteil (32) verbunden ist, angeordnet ist,
**dadurch gekennzeichnet, dass**
der zweite Abschnitt (42) mittels einer zumindest teilweise in Breitenrichtung (1y) des Fahrzeugsitzes (1) gerichteten Verlagerungsbewegung gemeinsam mit dem Rückenlehnenoberteil (32) vollständig gegenüber dem Rückenlehnenunterteil (31) verlagerbar ist, wobei der erste Abschnitt (41) in Höhenrichtung (1z) vollständig unterhalb des Rückenlehnenoberteils (32) angeordnet ist und eine Führungsbahn (411; 411`) für die Verlagerungsbewegung des zweiten Abschnitts (42) ausbildet, wobei die Führungsbahn (411; 411`) mittels zweier Führungselemente (412, 413) ausgebildet ist, welche in Höhenrichtung des Fahrzeugsitzes (1z) zueinander beabstandet angeordnet sind und wobei der zweite Abschnitt (42) mit den Führungselementen (412, 413) verbunden angeordnet ist und mittels diesen geführt ist.

2. Fahrzeugsitz (1) nach Anspruch 1,
**dadurch gekennzeichnet, dass**
die Führungsbahn (411; 411') mittels mindestens eines sich in Breitenrichtung (1y) des Fahrzeugsitzes (1) erstreckenden Führungselements (412, 413) ausgebildet ist.

3. Fahrzeugsitz (1) nach einem der vorhergehenden Ansprüche,
**dadurch gekennzeichnet, dass**
die Führungsbahn (411) in Breitenrichtung (1y) und in Höhenrichtung (1z) und/oder in Längsrichtung (1x) des Fahrzeugsitzes (1) verlaufend angeordnet ist.

4. Fahrzeugsitz (1) nach einem der vorhergehenden Ansprüche,
**dadurch gekennzeichnet, dass**
der zweite Abschnitt (42) einen starr mit dem Rückenlehnenoberteil (32) verbundenen Stützanteil (421) aufweist, welcher mit einem Gleitanteil (422) des zweiten Abschnitts (42) verbunden ist, wobei der Gleitanteil (422) mit dem ersten Abschnitt (41) verbunden und diesem gegenüber beweglich gelagert ist.

5. Fahrzeugsitz (1) nach Anspruch 4,
**dadurch gekennzeichnet, dass**
der Gleitanteil (422) gegenüber dem mindestens einen Führungselement (412, 413) des ersten Abschnitts (41) mittels Gleitführungselementen (4221) und/oder Rollenführungselementen gelagert ist.

6. Fahrzeugsitz (1) nach einem der Ansprüche 4 oder 5,
**dadurch gekennzeichnet, dass**
ein unterer Bereich (4212) des Stützanteils (421) in Sitzlängsrichtung (1x) benachbart zum Gleitanteil (422) angeordnet ist.

7. Fahrzeugsitz (1) nach einem der Ansprüche 4-6,
**dadurch gekennzeichnet, dass**
der Stützanteil (421) in einer an einem oberen Element (3111) eines Gestellanteils (311) des Rückenlehnenunterteils (31) angeordneten Aussparung (3112) während der Verlagerungsbewegung des Rückenlehnenoberteils (32) führbar ist.

8. Fahrzeugsitz (1) nach einem der vorherigen Ansprüche,
**dadurch gekennzeichnet, dass**
die Verlagerungsbewegung des Rückenlehnenoberteils (32) ausgehend von einer nicht-verlagerten Grundposition (P0) des Rückenlehnenoberteils (32) lediglich in eine einzelne Richtung (1yb) oder in zwei Richtungen (1ya, 1yb) initiierbar ist.

9. Fahrzeugsitz (1) nach einem der vorherigen Ansprüche,
**dadurch gekennzeichnet, dass**
ein Gestellanteil (311) des Rückenlehnenunterteils (31) mindestens ein Seitenteil (3113, 3114) aufweist, welches ein Stoppelement für die Verlagerungsbewegung des Rückenlehnenoberteils (32) ausbildet.

10. Fahrzeugsitz (1) nach einem der vorherigen Ansprüche,
**dadurch gekennzeichnet, dass**
der Gestellanteil (311) des Rückenlehnenunterteils (31) mindestens ein Seitenteil (3113, 3114) aufweist, mittels welchem das mindestens eine Führungselement (412, 413) gelagert ist.

11. Fahrzeugsitz (1) nach einem der vorherigen Ansprüche,
**dadurch gekennzeichnet, dass**
ein Verhältnis zwischen einer Gesamtbreite des Rückenlehnenunterteils (31) und einer Gesamtbreite des Rückenlehnenoberteils (32) einen Wert aus einem Bereich von 1 bis 3, bevorzugt von 2 aufweist.

## Claims

1. Vehicle seat (1) having a seat part (2) and a backrest part (3), which comprises a lower backrest part (31) and an upper backrest part (32) arranged adjacent thereto in the vertical direction (1z) of the vehicle seat (1),
a displacement device (4) being arranged with a first section (41), which is fixedly connected to the lower backrest part (31),
and with a second section (42), which is fixedly connected to the upper backrest part (32),
**characterised in that**
the second section (42) together with the upper backrest part (32) is completely displaceable with respect to the lower backrest part (31) by means of a displacement movement directed at least in part in the width direction (1y) of the vehicle seat (1), the first section (41) being arranged completely below the upper backrest part (32) in the vertical direction (1z) and forming a guideway (411; 411') for the displacement movement of the second section (42), wherein the guideway (411; 411`) is configured by means of two guide elements (412, 413) which are arranged at a distance from one another in the vertical direction of the vehicle seat (1z) and wherein the second section (42) is arranged connected to the guide elements (412, 413) and guided by means thereof.

2. Vehicle seat (1) according to claim 1,
**characterised in that**
the guideway (411; 411') is formed by means of at least one guide element (412, 413) extending in the width direction (1y) of the vehicle seat (1).

3. Vehicle seat (1) according to any of the preceding claims,
**characterised in that**
the guideway (411) is arranged running in the width direction (1y) and in the vertical direction (1z) and/or in the longitudinal direction (1x) of the vehicle seat (1).

4. Vehicle seat (1) according to any of the preceding claims,
**characterised in that**
the second section (42) has a support portion (421) which is rigidly connected to the upper backrest part (32) and is connected to a sliding portion (422) of the second section (42), the sliding portion (422) being connected to the first section (41) and being mounted so as to be movable relative thereto.

5. Vehicle seat (1) according to claim 4,
**characterised in that**
the sliding portion (422) is mounted relative to the at least one guide element (412, 413) of the first section (41) by means of sliding guide elements (4221) and/or roller guide elements.

6. Vehicle seat (1) according to either claim 4 or claim 5,
**characterised in that**
a lower region (4212) of the support portion (421) is arranged adjacent to the sliding portion (422) in the longitudinal direction of the seat (1x).

7. Vehicle seat (1) according to any of claims 4-6,
**characterised in that**
the support portion (421) is guidable in a recess (3112) arranged on an upper element (3111) of a frame portion (311) of the lower backrest part (31) during the displacement movement of the upper backrest part (32).

8. Vehicle seat (1) according to any of the preceding claims,
**characterised in that**
the displacement movement of the upper backrest part (32) starting from a non-displaced home position (P0) of the upper backrest part (32) can only be initiated in a single direction (1yb) or in two directions (1ya, 1yb).

9. Vehicle seat (1) according to any of the preceding claims,
**characterised in that**
a frame portion (311) of the lower backrest part (31) has at least one side part (3113, 3114) which forms a stop element for the displacement movement of the upper backrest part (32).

10. Vehicle seat (1) according to any of the preceding claims,
**characterised in that**
the frame portion (311) of the lower backrest part (31) has at least one side part (3113, 3114) by means of which the at least one guide element (412, 413) is mounted.

11. Vehicle seat (1) according to any of the preceding claims,
**characterised in that**
a ratio between a total width of the lower backrest part (31) and a total width of the upper backrest part (32) has a value in a range of from 1 to 3, preferably 2.

## Revendications

1. Siège de véhicule (1) ayant une partie siège (2) et une partie dossier (3), laquelle comporte une partie inférieure de dossier (31) et une partie supérieure de dossier (32) disposée adjacente à celle-ci dans la direction de la hauteur (1z) du siège de véhicule (1),
un dispositif de déplacement (4) étant disposé avec une première section (41), laquelle est reliée de manière fixe à la partie inférieure de dossier (31),
et avec une seconde section (42), laquelle est reliée de manière fixe à la partie supérieure de dossier (32),
**caractérisé par le fait que**
la seconde section (42) est apte à être déplacée complètement par rapport à la partie inférieure de dossier (31) conjointement avec la partie supérieure de dossier (32) au moyen d'un mouvement de déplacement orienté au moins partiellement dans la direction de la largeur (1y) du siège de véhicule (1),
la première section (41) étant disposée complètement au-dessous de la partie supérieure de dossier (32) dans la direction de la hauteur (1z) et formant une voie de guidage (411 ; 411') pour le mouvement de déplacement de la seconde section (42), la voie de guidage (411 ; 411') étant formée au moyen de deux éléments de guidage (412, 413), lesquels sont disposés à distance l'un de l'autre dans la direction de la hauteur (1z) du siège de véhicule, et la seconde section (42) étant disposée en étant liée aux éléments de guidage (412, 413) et étant guidée au moyen de ceux-ci.

2. Siège de véhicule (1) selon la revendication 1,
**caractérisé par le fait que**
la voie de guidage (411 ; 411') est réalisée au moyen d'au moins un élément de guidage (412, 413) s'étendant dans la direction de la largeur (1y) du siège de véhicule (1).

3. Siège de véhicule (1) selon l'une des revendications précédentes,
**caractérisé par le fait que**
la voie de guidage (411) est disposée en s'étendant dans la direction de la largeur (1y) et dans la direction de la hauteur (1z) et/ou dans la direction longitudinale (1x) du siège de véhicule (1).

4. Siège de véhicule (1) selon l'une des revendications précédentes,
**caractérisé par le fait que**
la seconde section (42) présente une partie de support (421) qui est liée de manière rigide à la partie supérieure de dossier (32), et qui est liée à une partie coulissante (422) de la seconde section (42), la partie coulissante (422) étant reliée à la première section (41) et étant montée de manière mobile par rapport à celle-ci.

5. Siège de véhicule (1) selon la revendication 4,
**caractérisé par le fait que**
la partie coulissante (422) est montée par rapport audit au moins un élément de guidage (412, 413) de la première section (41) au moyen d'éléments de guidage à glissement (4221) et/ou d'éléments de guidage à rouleaux.

6. Siège de véhicule (1) selon l'une des revendications 4 ou 5,
**caractérisé par le fait qu'**
une région inférieure (4212) de la partie de support (421) est disposée de manière adjacente à la partie coulissante (422) dans la direction longitudinale (1x) du siège.

7. Siège de véhicule (1) selon l'une des revendications 4 à 6,
**caractérisé par le fait que**
la partie de support (421) est apte à être guidée dans un évidement (3112) disposé sur un élément supérieur (3111) d'une partie cadre (311) de la partie inférieure de dossier (31) pendant le mouvement de déplacement de la partie supérieure de dossier (32).

8. Siège de véhicule (1) selon l'une des revendications précédentes,
**caractérisé par le fait que**
le mouvement de déplacement de la partie supérieure de dossier (32) est apte à être initialisé à partir d'une position de base non déplacée (P0) de la partie supérieure de dossier (32) simplement dans une seule direction (1yb) ou dans deux directions (1ya, 1yb).

9. Siège de véhicule (1) selon l'une des revendications précédentes,
**caractérisé par le fait qu'**
une partie cadre (311) de la partie inférieure de dossier (31) présente au moins une partie latérale (3113, 3114), laquelle forme un élément de butée pour le mouvement de déplacement de la partie supérieure de dossier (32).

10. Siège de véhicule (1) selon l'une des revendications précédentes,
**caractérisé par le fait que**
la partie cadre (311) de la partie inférieure de dossier (31) présente au moins une partie latérale (3113, 3114), au moyen de laquelle ledit au moins un élément de guidage (412, 413) est monté.

11. Siège de véhicule (1) selon l'une des revendications précédentes,
**caractérisé par le fait qu'**
un rapport entre une largeur totale de la partie inférieure de dossier (31) et une largeur totale de la partie supérieure de dossier (32) présente une valeur dans une plage de 1 à 3, de préférence de 2.
